# EUROPEAN PATENT SPECIFICATION

(11) **EP 0 990 544 B1**
(45) Date of publication and mention of the grant of the patent: **11.05.2005**
(21) Application number: 99202936.3
(22) Date of filing: 09.09.1999
(51) Int. Cl.: B60J 7/02

(54) **Open roof construction for a vehicle**
Konstruktion eines öffnungsfähigen Fahrzeugdaches
Construction de toit ouvrant pour véhicule

(30) Priority: 02.10.1998 NL 1010240
(43) Date of publication of application: 05.04.2000
(73) Proprietor: Inalfa Roof Systems Group B.V., 5804 AH Venray (NL)
(72) Inventor: Nabuurs, Martinus Wilhelmus Maria, 5825 JT Overloon (NL)
(74) Representative: Metman, Karel Johannes

(56) References cited:
- EP-A- 0 442 773
- EP-A- 0 786 370
- GB-A- 2 122 955

## Description

The invention relates to an open roof construction according to the preamble of claim 1.

Such open roof constructions are known in a variety of embodiments thereof. Increasingly heavy demands are made on said open roof constructions as regards the amount of noise that is produced upon adjustment of the closure means and as regards the smooth movement of the working parts. One example of a solution for these demands is disclosed in DE-A-35 37 964. This document shows a guide cover comprising a string of flexibly connected elements covering the guide and being connected to the operating mechanism so as to move therewith.

The object of the invention is to provide a further improved open roof construction.

In order to accomplish that objective, the open roof construction according to the invention is characterized by the aspects as defined in the characterizing portion of claim 1. Advantageous embodiments form the subject matter of the dependent claims.

According to the invention, a cover is provided for the guide rails of the mechanism, so that the mechanism is protected against penetrating dirt, and a smooth, low-noise movement of the parts in question in the guide rail can be achieved. Also the extent of wear on said parts will be reduced.

The invention will be explained in more detail hereafter with reference to the drawing, which schematically illustrates an embodiment of an open roof construction not forming part of the invention.

Fig. 1 is a schematic plan view of a vehicle roof fitted with an open roof construction not forming part of the invention.

Fig. 2 is a larger-scale, very schematic sectional view along line II-II in Fig. 1.

Fig. 3 is an even larger-scale, very schematic sectional view along line III-III in Fig. 2.

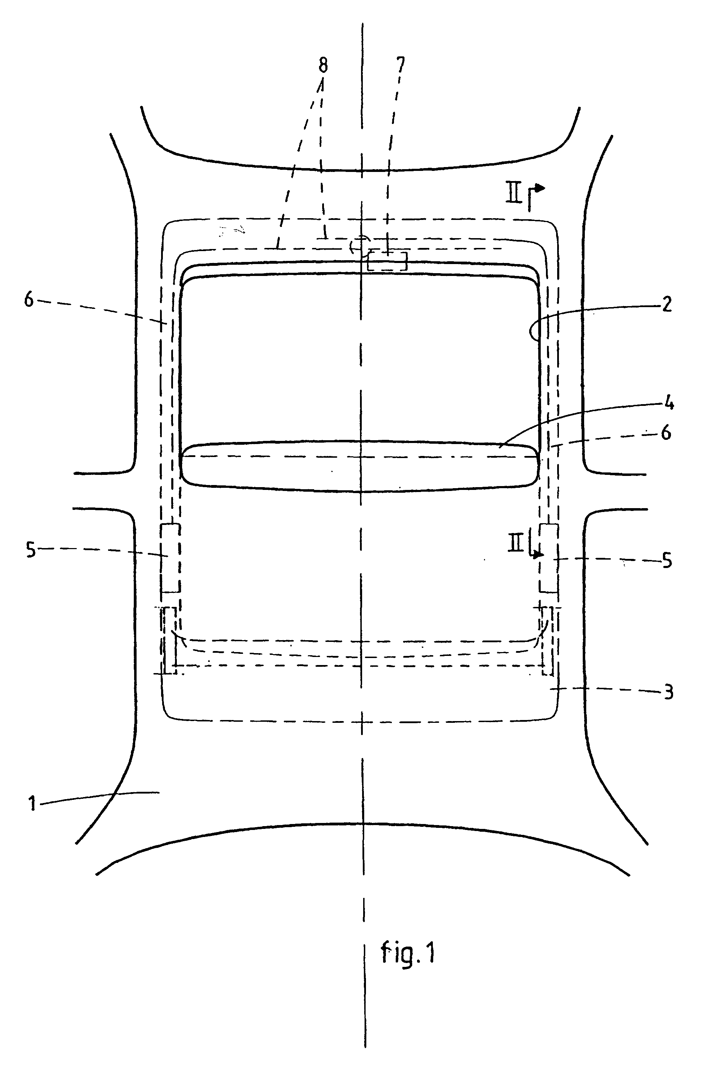

The drawing, and in the first instance Fig. 1, shows the fixed roof 1 of a motor vehicle, such as a passenger car, wherein a roof opening 2 is formed in fixed roof 1 for mounting an open roof construction therein. Said open roof construction comprises a stationary frame 3 or similar stationary means to be fixed to the vehicle for movably supporting a closure means 4.

In the illustrated embodiment, the open roof construction is a so-called sliding roof or tilting-sliding roof, which in this embodiment comprises a more or less rigid and preferably transparent panel 4 as the closure means, which is capable of selectively closing the roof opening 2 or releasing it to a greater or lesser extent. To this end, panel 4 is laterally supported by mechanisms 5, which are slidably accommodated in guide rails 6, which are mounted on frame 3 or form part thereof and which extend parallel to each other in longitudinal direction on either side of roof opening 2 and rearwards thereof. Said mechanisms 5 can be moved synchronously in said guide rails 6, moving said panel not only in longitudinal direction but also in vertical direction thereby. To this end the mechanisms 5 are operated from a driving device 7, such as an electric motor, for example via pull-push cables 8.

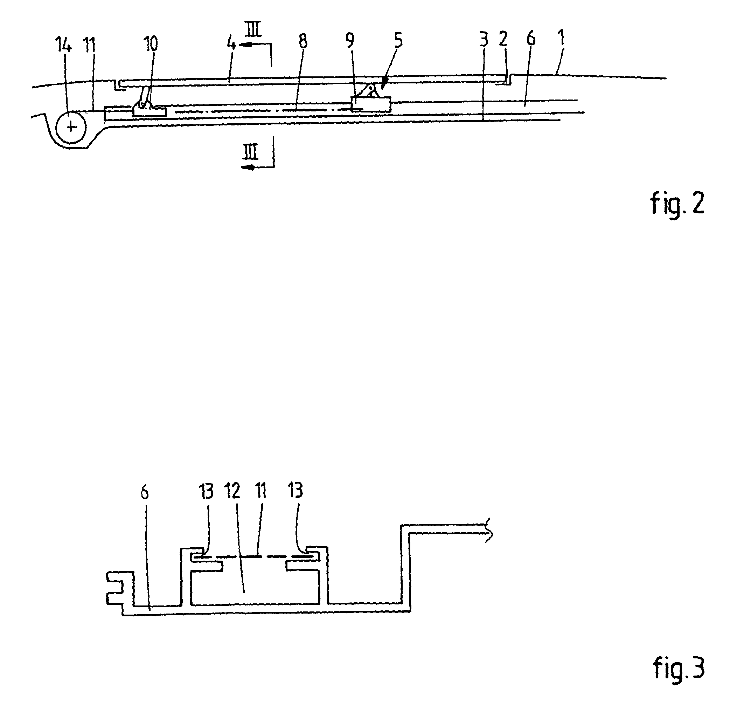

As is shown in Fig. 2, said pull-push cables 8 are connected to slides 9 of mechanisms 5, which slides 9 are slidably accommodated in guide rails 6. By moving slides 9, also parts of the mechanisms 5 that mate therewith are moved so as to adjust panel 4. The front side of panel 4 is pivotally supported by a front sliding shoe 10, which is likewise guided in associated guide rails 6. In order to have the movement of slides 9 in guide rails 6 take place as smoothly and as low-noise and low-wear as possible, the invention proposes to cover each of the guide rails with a cover in the form of a curtain 11 to be wound and unwound.

As is shown in Fig. 3, said curtain 11 covers the open upper side of a groove 12 of each guide rail 6, and it is guided with its side edges in lateral, opposed horizontal grooves 13 present in the upper side of each guide rail 6.

A spring-biassed winding roll 14 (Fig. 2) of curtain 11 is mounted at the front end of each guide rail 6, and the free end of curtain 11 is attached to sliding shoe 10, so that the curtain will follow the movements of the sliding shoe. Sliding shoe 10 will move rearwards from a front position when panel 4 is being moved rearward to an open position, above or under fixed roof 1. As a result, panel 4 no longer covers the guide rails, and said covering function is now taken over by curtains 11 in that they are taken along towards the rear along with the sliding shows 10, thereby covering the part of guide rails 6 that has just been uncovered by panel 4. As a result, any dirt entering through the roof opening cannot find its way into this part of the guide rails 6. When panel 4 and sliding shoes 10 are moved back, curtain 11 will automatically be wound on winding roller 14 again as a result of the spring tension on said winding roll.

According to the invention the cover is a deformable cover, which lies on the guide rails and which allows the respective parts in the guide rails to pass by deforming.

It will be apparent from the foregoing that the invention provides an open roof construction whose guide rails are protected against fouling, thus ensuring a smooth, low-noise and low-wear movement of parts in the guide rails. The cover also makes the open roof construction look more attractive from above when the panel is open.

The invention is not restricted to the above-described embodiment as shown in the drawing, which can be varied in several ways without departing from the scope of the invention. Closure means 4, for example, may also be comprised of a foldable material, louvres and the like. An alternative or additional feature would be to provide a cover on the rear side of the mechanisms.

## Claims

1. An open roof construction for a vehicle having an opening (2) in its fixed roof (1), comprising a stationary part (3) with at least one guide rail (6), which is to be secured to the roof, an adjustable closure means (4) which is supported by an adjusting mechanism (5) which is capable of sliding movement in said guide rail, which closure means can be adjusted between a closed position, in which it closes said roof opening, and an open position, in which it releases said roof opening, at least partially so, on the front side, wherein said guide rail (6) is provided with a cover adapted to protect the guide rail against penetrating dirt, **characterized in that** the cover is a deformable cover, which lies on the guide rail and which allows respective parts of the adjusting mechanism in the guide rail to pass by deforming.

2. An open roof construction according to claim 1, wherein said guide rail (6) comprises at least one groove (12), over the open upper side of which said cover is provided.

3. An open roof construction according to claim 1 or 2, wherein said adjusting mechanism (5) comprises a sliding shoe (10) fitted in said guide rail (6).

4. An open roof construction according to any one of the preceding claims, wherein guide rails (6) are mounted on either side of the roof opening (2), each guide rail having its own cover.

## Patentansprüche

1. Offendachkonstruktion für ein Fahrzeug mit einer Öffnung (2) in dessen Festdach (1), aufweisend ein stationäres Teil (3) mit mindestens einer Führungsschiene (6), welches an dem Dach zu sichern ist, ein verstellbares Verschlussmittel (4), welches von einem Verstellmechanismus (5) gehalten ist, welcher zur Gleitbewegung in der Führungsschienen im Stande ist, welches Verschlussmittel zwischen einer Schließposition, in welcher es die Dachöffnung schließt, und einer Offenposition verstellbar ist, in welcher es die Dachöffnung zumindest teilweise an der vorderen Seite freigibt, wobei die Führungsschiene (6) mit einer Abdeckung versehen ist zum Schutz der Führungsschiene gegen eindringenden Schmutz, **dadurch gekennzeichnet, dass** die Abdeckung eine deformierbare Abdeckung ist, welche auf der Führungsschiene liegt und welche durch Deformieren jeweiligen Teilen des Verstellmechanismus erlaubt, in der Führungsschiene zu passieren.

2. Offendachkonstruktion gemäß Anspruch 1, wobei die Führungsschiene (6) mindestens eine Nut (12) auf der offenen, oberen Seite aufweist, auf welcher die Abdeckung bereitgestellt ist.

3. Offendachkonstruktion gemäß Anspruch 1 oder 2, wobei der Verstellmechanismus (5) einen Gleitschuh (10) aufweist, welcher in der Führungsschiene (6) eingesetzt ist.

4. Offendachkonstruktion gemäß einem der vorhergehenden Ansprüche, wobei die Führungsschienen (6) auf beiden Seiten der Dachöffnung (2) montiert sind, wobei jede Führungsschiene ihre eigene Abdeckung aufweist.

## Revendications

1. Construction de toit ouvrant pour véhicule comportant une ouverture (2) dans son toit fixe (1), comprenant une partie stationnaire (3) avec au moins un rail de guidage (6), qui doit être fixé sur le toit, des moyens de fermeture ajustables (4) qui sont supportés par un mécanisme d'ajustement (5) qui est apte à se déplacer en un mouvement coulissant dans ledit rail de guidage, lesquels moyens de fermeture peuvent être ajustés entre une position fermée, dans laquelle ils ferment ladite ouverture de toit, et une position ouverte, dans laquelle ils libèrent ladite ouverture de toit, au moins partiellement sur le côté avant, dans laquelle ledit rail de guidage (6) est muni d'un couvercle apte à protéger ledit rail de guidage contre la pénétration de la poussière,
**caractérisée en ce que,**
le couvercle est un couvercle déformable, qui se situe sur le rail de guidage et qui permet aux pièces respectives du mécanisme d'ajustement dans le rail de guidage de passer par déformation.

2. Construction de toit ouvrant selon la revendication 1, dans laquelle ledit rail de guidage (6) comprend au moins une gorge (12), sur le côté supérieur ouvert de laquelle est prévu ledit couvercle.

3. Construction de toit ouvert selon la revendication 1 ou 2, dans laquelle ledit mécanisme d'ajustement (5) comprend un sabot coulissant (10) monté dans ledit rail de guidage (6).

4. Construction de toit ouvert selon l'une quelconque des revendications précédentes, dans laquelle des rails de guidage (6) sont montés de part et d'autre de l'ouverture du toit (2), chaque rail de guidage ayant son propre couvercle.
